# EUROPEAN PATENT SPECIFICATION

(11) **EP 4 434 937 B1**
(45) Date of publication and mention of the grant of the patent: **21.10.2026**
(21) Application number: 22934874.3
(22) Date of filing: 30.11.2022
(51) Int. Cl.: C01B 25/37, C01B 25/45, C01G 3/10, C01G 51/10, B22F 9/24, C01G 5/02, C01D 5/14, H01M 4/58

(54) **PREPARATION METHOD FOR IRON PHOSPHATE AND PREPARATION METHOD FOR LITHIUM IRON PHOSPHATE**
VERFAHREN ZUR HERSTELLUNG VON EISENPHOSPHAT UND VERFAHREN ZUR HERSTELLUNG VON LITHIUMEISENPHOSPHAT
PROCÉDÉ DE PRÉPARATION DE PHOSPHATE DE FER ET PROCÉDÉ DE PRÉPARATION DE PHOSPHATE DE FER DE LITHIUM

(30) Priority: 30.03.2022 CN 202210328818
(43) Date of publication of application: 25.09.2024
(73) Proprietor: Hubei Yuhao High-Tech New Material Co., Ltd., Shiyan, Hubei 442000 (CN)
(72) Inventor: WANG, Qin, Hubei 442000 (CN)
(74) Representative: Manitz Finsterwald Patent- und Rechtsanwaltspartnerschaft mbB
(86) International application number: PCT/CN2022/135562
(87) International publication number: WO 2023/185056

(56) References cited:
- CN-A- 102 491 302
- CN-A- 102 730 659
- CN-A- 102 730 659
- CN-A- 103 746 115
- CN-A- 108 101 014
- CN-A- 108 706 561
- CN-A- 109 368 610
- CN-A- 114 604 837
- CN-B- 108 706 561
- CN-B- 109 775 679
- JIN, CHENG; WANG, EN-QIANG; LI, DENG-XIN: "Pressure Reduction Leaching Iron from Sulfate Slag", NONFERROUS METALS (EXTRACTIVE METALLURGY), YEJIN GONGYE CHUBANSHE, BEIJING, CN, no. 11, 31 December 2011 (2011-12-31), Beijing, CN , pages 6 - 8, 16, XP009549336, ISSN: 1007-7545, DOI: 10.3969/j.issn.1007-7545.2011.11.002
- CHEN JI-CHUN, CHEN YONG-LIANG: "The Preparation of Ferrous Sulfate from Pyrite Cinder by Reduction Roasting Method ", MULTIPURPOSE UTILIZATION OF MINERAL RESOURCES, no. 3, 1 January 2004 (2004-01-01), pages 42 - 45, XP093094656, DOI: 10.3969/j.issn.1000-6532.2004.03.011
- TAPIO SALMI ET AL.: "Mechanistic modelling of kinetics and mass transfer for a solid–liquid system: Leaching of zinc with ferric iron", CHEMICAL ENGINEERING SCIENCE, vol. 65, 9 April 2010 (2010-04-09), pages 4460 - 4471, XP027075088, DOI: 10.1016/j.ces.2010.04.004

## Description

### TECHNICAL FIELD

The present invention belongs to the field of battery technology, and in particular relates to a preparation method of iron phosphate and a preparation method of lithium iron phosphate.

### BACKGROUND

Pyrite cinder has been used as a raw material for iron smelting for more than 100 years. The amount of pyrite cinder discharged every year can reach more than 3 million tons, of which only more than 1 million tons have been properly utilized, and the rest is discharged into the environment. If accumulated, it will occupy farmland and pollute the soil; if discharged into rivers, it will pollute water bodies.

Currently, there are many methods for comprehensive utilization of pyrite cinder, and most of the pyrite cinder is used for "making bricks with iron concentrate sorting residue". As raw material for iron smelting, pyrite cinder with an iron content of no less than 25% has certain economic value through sorting of iron concentrate from it. Its sorting process is not much different from the general iron ore sorting process. Gravity sorting or magnetic sorting can be used according to the specific magnetization coefficient of iron minerals in the pyrite cinder. The economic analysis is as follows: if the annual pyrite cinder sorting amount is 20,000 tons, assuming that ion concentrate with an iron content of 60% is sorted from the pyrite cinder with an iron content of 30% (as the iron concentrate with an iron content ≥60% can be directly used for iron smelting), according to the calculation based on a yield of 40%, it can produce 8,000 tons of iron concentrate annually. The price of the ion concentrate with an iron content of 60% (sulfur content ≤ 0.5) is 110 yuan per ton, the production cost is 70 yuan per ton, the profit per ton is 40 yuan, and the annual profit is 320,000 yuan. The total investment in building an iron sorting workshop is about 500,000 yuan, and the investment can be fully recovered within two years of production. After sorting the iron concentrate, there are still 12,000 tons of residue left, which can be used to make bricks. Pyrite cinder itself has no cementing ability, but it contains active substances such as SiO₂ and AI₂O₃.

Pyrite cinder can be used as a raw material for sintering, mainly utilizing its iron content to reduce the production cost of sintering raw materials. However, pyrite cinder has poor balling characteristics and high water absorption, which affects sintering productivity. In addition, it contains high sulfur content and harmful elements such as Cu, Pb and Zn, which affect the quality of the sintered material. The addition rate of pyrite cinder in sintering materials is generally less than 10%. Processing to increase its fineness and iron content and reduce its sulfur content allows pyrite cinder to be used as a raw material for pelletizing. Some existing technologies employ a high-temperature chlorination process to chloride the metals contained in pyrite cinder, followed by hydrometallurgy to extract precious metals such as gold and silver, while removing harmful metals from the pyrite cinder.

With the development of lithium iron phosphate, cheap iron sources have become the focus of attention. The price of ferrous sulfate crystals, a by-product of titanium dioxide, has been steadily rising, reaching approximately 350 yuan per ton, with the freight cost of about 70 yuan per ton ~ 90 yuan per ton. As the production capacity of lithium iron material expands, ferrous sulfate crystals continue to rise in price and are difficult to buy. Therefore, the development of new, cost effective, readily available iron sources is urgently needed. Pyrite cinder is generated in very large quantities annually, reaching millions of tons, yet its recycling rate is low. Related technologies are known from patent documents CN102730659A, CN108706561B, and CN109775679B.

In view of this, the present invention is proposed.

### SUMMARY

In view of this, the present invention is set out in the appended claims, which provides a preparation method of iron phosphate and a preparation method of lithium iron phosphate. The method of iron phosphate is simple with low cost, and can recover cobalt, copper, gold, silver, sodium sulfate, etc. from the pyrite cinder, which greatly increases the added value of pyrite cinder and improves the resource utilization rate of pyrite cinder.

The present invention provides a preparation method of iron phosphate, which includes the following steps:
mixing pyrite cinder and an sulfite evenly in water to obtain a first mixed system; adding phosphoric acid and a buffer to the first mixed system to perform a leaching reaction; performing a first solid-liquid separation on a slurry obtained from the leaching reaction to obtain a first filtrate and a first residue; introducing air into the first filtrate and then performing a first stirring reaction on the first filtrate; performing a second solid-liquid separation on a slurry obtained from the first stirring reaction to obtain a second filtrate and a second residue; and calcining the second residue to obtain iron phosphate;
wherein the pressure of the leaching reaction is 0.25 MPa ~ 0.5 MPa; the time of the leaching reaction is 1 hour ~ 2 hours;
the pH of the reaction system of the leaching reaction is 1.5-3;
the buffer includes sodium dihydrogen phosphate and/or disodium hydrogen phosphate.

Preferably, the particle size of the pyrite cinder is 80 mesh ~ 120 mesh.

Preferably, the molar ratio of iron elements in the pyrite cinder to the sulfite, the phosphoric acid, and the buffer is 1: (0.35-0.4): (0.25-0.3): (1.7-1.75).

Preferably, the phosphoric acid and the buffer are added to the first mixed system within 15 minutes ~ 30 minutes.

Preferably, the ratio of the volume of the air introduced into the first filtrate per hour to a molar amount of ferrous ions in the first filtrate is (8~12) m³: (28~32) mol.

The temperature of the leaching reaction is 130°C~170°C.

Preferably, the leaching reaction is carried out under a stirring condition.

Before introducing air into the first filtrate, the first filtrate is heated to 40°C~60°C under a stirring condition.

Preferably, the first stirring reaction specifically includes:
stirring the first filtrate after introduction of air until the iron content in the supernatant is less than or equal to 0.5g/L, heating the first filtrate to 90°C~95°C and continuing stirring for 30 minutes ~ 60 minutes.

Before calcining the second residue, the second residue is washed and dried.

Preferably, the temperature of the washing water for washing the second residue is 40°C~50°C.

Preferably, the washing is carried out until the pH of the liquid after wash is greater than 4.5.

Preferably, the moisture content of the dried second residue is less than 0.5%. The second residue is calcined at a temperature of 650°C~680°C.

Preferably, the second residue is calcined for 60 minutes ~ 90 minutes.

The preparation method of iron phosphate further includes:
after the leaching reaction, introducing the gas generated from the leaching reaction into a sodium hydroxide solution to obtain sodium sulfite.

The preparation method of iron phosphate further includes:
cooling the second filtrate and performing a third solid-liquid separation on the second filtrate to obtain sodium sulfate crystals and a mother liquor; adding sodium sulfide to the mother liquor to obtain a third filtrate and a third residue; adjusting the pH of the third filtrate to 9 ~10, and performing a fourth solid-liquid separation on the third filtrate to obtain a fourth filtrate and a fourth residue; calcining the third residue, and dissolving the calcined third residue with sulfuric acid to obtain a second mixed system; performing extraction and concentration crystallization on the second mixed system to obtain crude copper sulfate and crude cobalt sulfate.

Preferably, the second filtrate is cooled to a temperature of 5°C~10°C.

Preferably, the third residue is calcined at a temperature of 500°C~700°C.

Preferably, the third residue is calcined for 2 hours to 4 hours.

The preparation method of iron phosphate further includes:
adding aqua regia to the first residue after flotation and enrichment to obtain a third mixed system; performing a fifth solid-liquid separation on the third mixed system to obtain a fifth filtrate; performing a sixth solid-liquid separation on the fifth filtrate added with sodium chloride to obtain silver chloride and a sixth filtrate; adding iron powder to the sixth filtrate to obtain crude gold powder.

The present invention provides a preparation method of lithium iron phosphate, including the preparation method of iron phosphate described in the above technical solution.

The preparation method of lithium iron phosphate is simple and cost effective.

Compared to the prior art, the beneficial effects of the present invention are as follows:
(1) The preparation method of ferric phosphate provided by the present invention cleverly uses high-pressure reduction leaching to dissolve Fe₃O₄ and red iron oxide, which are commonly difficult to be dissolved in acid, wherein a mixed solution of phosphoric acid and sodium dihydrogen phosphate is used to leach the reduced iron salts to obtain a solution of ferrous dihydrogen phosphate. Moreover, as pH is relatively high, the dissolution of aluminum, calcium, magnesium, and other elements is minimized, thereby significantly improving the leaching rate of iron. The leached iron is then used in the preparation of iron phosphate.
(2) The preparation method of iron phosphate provided by the present invention can also recover cobalt, copper, gold, silver, sodium sulfate, etc. from pyrite cinder, greatly increasing the added value of pyrite cinder and improving the resource utilization rate of pyrite cinder.
(3) The preparation method of lithium iron phosphate provided by the present invention is simple and cost effective.

### BRIEF DESCRIPTION OF THE DRAWINGS

In order to more clearly describe the embodiments of the present application, the accompanying drawings to be used in the description of the embodiments or prior art will be described briefly. Obviously, the drawings described below are only for some embodiments of the present application. For ordinary skilled persons in the art, other drawings can also be obtained based on the following drawings without creative work.
FIG. 1 is a scanning electron microscopic image of iron phosphate obtained according to an embodiment of the present invention.
FIG. 2 is a scanning electron microscopic image of iron phosphate obtained according to another embodiment of the present invention.
FIG. 3 is a particle size distribution diagram of iron phosphate obtained according to yet another embodiment of the present invention.

### DETAILED DESCRIPTION

The following will clearly and completely describe the technical solutions of the present invention with reference to the drawings and the embodiments. It can be understood by the skilled in the art that the described embodiments are merely some rather than all of the embodiments of the present invention. The embodiments are for illustration only and not intended to limit the scope of the present invention. All other embodiments obtained by a person of ordinary skill in the art based on the embodiments of the present invention without making creative efforts shall fall within the protection scope of the present invention. When specific conditions are not specified in the embodiments, conventional conditions or those recommended by manufacturers are employed. Reagents or instruments not specifying the manufacturer are conventional products available for purchase on the market.

An aspect of the present invention relates to a preparation method of iron phosphate, which includes the following steps:
mixing pyrite cinder and an sulfite evenly in water to obtain a first mixed system; adding phosphoric acid and a buffer to the first mixed system to perform a leaching reaction; performing a first solid-liquid separation on a slurry obtained from the leaching reaction to obtain a first filtrate and a first residue; introducing air into the first filtrate and then performing a first stirring reaction on the first filtrate; performing a second solid-liquid separation on a slurry obtained from the first stirring reaction to obtain a second filtrate and a second residue; and calcining the second residue to obtain iron phosphate;
wherein the pressure of the leaching reaction is 0.25 MPa ~ 0.5 MPa;
the pH of the reaction system of the leaching reaction is 1.5-3;
the buffer includes sodium dihydrogen phosphate and/or disodium hydrogen phosphate.

In some specific embodiments, the pressure of the leaching reaction can be, for example, but is not limited to 0.25MPa, 0.3MPa, 0.35MPa, 0.4MPa, 0.45MPa, or 0.5MPa.

In some specific embodiments, the pH of the reaction system of the leaching reaction can be, for example, but is not limited to 1.5, 2, 2.5, or 3.

Pyrite cinder, also known as pyrite ash or slag, refers to a waste product obtained in sulfuric acid production using pyrite, and is a kind of chemical industry waste. Since the cinder contains iron, it can be used as a raw material in steel making. Pyrite cinder contains about 20%~50% iron oxides (Fe₂O₃, Fe₃O₄, FeO), about 15%~65% silicon dioxide, about 10% aluminum oxide, about 5% calcium oxide, less than 5% magnesium oxide, about 1%~2% sulfur, and usually also contains copper, cobalt, lead, zinc, gold and silver, wherein Fe₃O₄ is formed to be dense under the passivation effect of sulfuric acid.

The preparation method of ferric phosphate provided by the present invention cleverly uses high-pressure reduction leaching to dissolve Fe₃O₄ and red iron oxide, which are commonly difficult to be dissolved in acid, wherein a mixed solution of phosphoric acid and sodium dihydrogen phosphate is used to leach the reduced iron salts to obtain a solution of ferrous dihydrogen phosphate. Moreover, as the pH of the reaction system of the leaching reaction is maintained at 1.5-3, the dissolution of aluminum, calcium, magnesium, and other elements is minimized, thereby significantly improving the leaching rate of iron.

Phosphoric acid can provide hydrogen ions; sodium dihydrogen phosphate and disodium hydrogen phosphate as buffer solutions can replenish hydrogen ions after the hydrogen ions of phosphate are consumed, and can prevent the pH of the solution from becoming over low, thus avoiding the leaching of other impurities.

The leaching reaction of the present invention is carried out under specific leaching conditions, greatly improving the leaching rate. In addition, the added sulfite exhibits a reducing property in an acidic environment, thereby reducing ferric ions to divalent iron, further increasing the leaching rate, and finally yielding a ferrous dihydrogen phosphate solution. Moreover, in a weak acidic environment with abundant dihydrogen phosphate, the ferrous dihydrogen phosphate solution is generated.

Preferably, the sulfite includes sodium sulfite and/or potassium sulfite.

Preferably, the particle size of the pyrite cinder is 80 mesh ~ 120 mesh.

In some specific embodiments, the particle size of the pyrite cinder can be, for example, but is not limited to 80 mesh, 90 mesh, 100 mesh, 110 mesh, or 120 mesh.

Preferably, the molar ratio of iron elements in the pyrite cinder to the sulfite, the phosphoric acid, and the buffer is 1: (0.35-0.4): (0.25-0.3): (1.7-1.75).

In some specific embodiments, the molar ratio of the iron elements in the pyrite cinder to the sulfite, the phosphoric acid, and the buffer can be, for example, but is not limited to 1:0.35:0.25:1.7, 1:0.37:0.28:1.173, or 1:0.4:0.3:1.75.

Preferably, the phosphoric acid and the buffer are added to the first mixed system within 15 minutes ~ 30 minutes (for example, 15 minutes, 20 minutes, 25 minutes, or 30 minutes).

Preferably, the ratio of the volume of the air introduced into the first filtrate per hour to a molar amount of ferrous ions in the first filtrate is (8~12) m³: (28~32) mol.

In some specific embodiments, the ratio of the volume of the air introduced into the first filtrate per hour to the ferrous ions in the first filtrate can be, for example, but is not limited to 8:28, 10:30, or 12:32.

Preferably, the temperature of the leaching reaction is 130°C~170°C.

In some specific embodiments, the temperature of the leaching reaction can be, for example, but is not limited to 130°C, 140°C, 150°C, 160°C, or 170°C.

Preferably, the leaching reaction time is 1 to 2 hours.

In some specific embodiments, the leaching reaction time can be, for example, but is not limited to 1 hour, 1.2 hours, 1.4 hours, 1.6 hours, 1.8 hours, or 2 hours

Preferably, the leaching reaction is carried out under a stirring condition.

Preferably, before introducing air into the first filtrate, the first filtrate is heated to 40°C~60°C (for example, 40°C, 45°C, 50°C, 55°C, or 60°C) under a stirring condition.

Preferably, the first stirring reaction specifically includes:
stirring the first filtrate after introduction of air until the iron content in the supernatant is less than or equal to 0.5g/L, heating the first filtrate to 90°C~95°C (for example, 90°C, 91°C, 92°C, 93°C, 94°C, or 95°C) and continuing stirring for 30 minutes ~ 60 minutes (for example, 30min, 35min, 40min, 45min, 50min, 55min, or 60min).

Preferably, before calcining the second residue, the second residue is washed and dried.

Preferably, the second residue is washed at a temperature of 40°C~50°C (for example, 40°C, 42°C, 44°C, 46°C, 48°C, or 50°C).

Preferably, the second residue is washed until the pH of the liquid after wash is greater than 4.5 (for example, 4.5, 4.8, 5, 5.5, 6, or 6.5).

Preferably, the moisture content of the dried second residue is less than 0.5% (for example, 0.1%, 0.2%, 0.3%, 0.4%, or 0.5%).

Preferably, the second residue is calcined at a temperature of 650°C~680°C (for example, 650°C, 655°C, 660°C, 665°C, 670°C, 675°C, or 680°C).

Preferably, the second residue is calcined for 60 minutes ~ 90 minutes (for example, 60 minutes, 65 minutes, 70 minutes, 75 minutes, 80 minutes, 85 minutes, or 90 minutes).

Preferably, the calcined second residue is then to be cooled, crushed, screened, iron removed, and vacuum packaged to obtain anhydrous iron phosphate.

Preferably, the preparation method of iron phosphate further includes:
after the leaching reaction, introducing the gas generated from the leaching reaction into a sodium hydroxide solution to obtain sodium sulfite, which is recovered for later use.

Preferably, the preparation method of iron phosphate further includes:
cooling the second filtrate and performing a third solid-liquid separation on the second filtrate to obtain sodium sulfate crystals and a mother liquor; adding sodium sulfide to the mother liquor to obtain a third filtrate and a third residue; adjusting the pH of the third filtrate to 9 ~10, and performing a fourth solid-liquid separation on the third filtrate to obtain a fourth filtrate and a fourth residue; calcining the third residue, and dissolving the calcined third residue with sulfuric acid to obtain a second mixed system; performing extraction and concentration crystallization on the second mixed system to obtain crude copper sulfate and crude cobalt sulfate.

Preferably, the second filtrate is cooled to a temperature of 5°C~10°C (for example, 5°C, 7°C, 8°C, 9°C, or 10°C).

The second filtrate can be mixed with a sulfite, then mixed with sodium dihydrogen phosphate, and then returned to leach the pyrite cinder. The second filtrate after three cycles of recycling use is concentrated to a Baumé degree of 45-50, then cooled to a temperature of 5°C-10°C, centrifuged and dried to obtain sodium sulfate crystals.

The fourth filtrate is added with phosphoric acid and sodium dihydrogen phosphate, and then is returned to leach the pyrite cinder.

Preferably, the third residue is calcined at a temperature of 500°C~700°C (for example, 530°C, 560°C, 590°C, 620°C, 650°C, 680°C, or 700°C).

Preferably, the third residue is calcined for 2 to 4 hours (for example, 2 hours, 2.5 hours, 3 hours, 3.5 hours, or 4 hours).

The waste gas generated in calcining the third residue is absorbed by a sodium hydroxide solution, which is then returned to leach the pyrite cinder.

Preferably, the preparation method of iron phosphate further includes:
adding aqua regia to the first residue after flotation and enrichment to obtain a third mixed system; performing a fifth solid-liquid separation on the third mixed system to obtain a fifth filtrate; performing a sixth solid-liquid separation on the fifth filtrate added with sodium chloride to obtain silver chloride and a sixth filtrate; adding iron powder to the sixth filtrate to obtain crude gold powder.

The present invention not only uses the iron source in the pyrite cinder to prepare iron phosphate, but also enriches the copper and cobalt from the pyrite cinder to obtain crude copper sulfate and crude cobalt sulfate, and can also enrich silver and gold from the pyrite cinder.

Another aspect of the present invention relates to a preparation method of lithium iron phosphate, including the preparation method of iron phosphate.

The preparation method of lithium iron phosphate is as follows:

The above-mentioned anhydrous iron phosphate is added with a lithium source, a carbon source, and a dopant, and then added with purified water to form a slurry. The slurry is nano-ground and then spray-dried to obtain a spray-dried material, which is then calcined in an inert atmosphere to obtain a calcined material. The calcined material is subjected to crushing, screening, iron removal and vacuum packaging to obtain lithium iron phosphate.

The mass ratio of the anhydrous iron phosphate, the lithium source, the carbon source, and the dopant is 1:(0.2-0.25):(0.1-0.2):(0.0005-0.005). The lithium source is lithium carbonate or lithium hydroxide. The carbon source is at least one of glucose, sucrose, soluble starch, PEG, citric acid, ascorbic acid, or benzoic acid. The dopant is at least one of a titanium compound, a vanadium compound, a magnesium compound, or a manganese compound.

In nano-grinding, the slurry is ground until the particle size thereof reaches 100nm~600nm; the inert atmosphere is nitrogen gas, the calcining temperature is 600°C~900 °C, and the calcining time is 5 hours ~ 40 hours.

The preparation method of lithium iron phosphate is simple and cost effective.

In order to further illustrate the present invention, the preparation method of iron phosphate and the preparation method of lithium iron phosphate provided by the present invention are described in detail below with reference to examples, but the examples should not be understood as limiting the scope of the present invention.

### Example 1

The preparation method of iron phosphate provided in this example includes the following steps:
(1) The pyrite cinder is ground in a ball mill and sieved through a 100-mesh sieve. The test data of the pyrite cinder samples are shown in Table 1.

**Table 1: Specific information of pyrite cinder**

| Index | Fe₂O₃ | Fe₃O₄ | FeO | Si | Al |
|---|---|---|---|---|---|
| Data | 16.2% | 52.5% | 1.9% | 10.5% | 3.7% |
| Ca | Mg | S | Cu | Co | Zn |
| 2.7% | 3.1% | 1.2% | 0.21% | 0.11% | 0.0078% |
| Au | Ag | Pb | Ni | Cr | cd |
| 2.1g/ton | 21.7g/ton | 0.0112% | 0.0039% | 0.0078% | 0.0002% |

(2) The pyrite cinder is introduced into an autoclave, added with a sodium sulfite solution, mixed and stirred. A mixed solution of phosphoric acid and sodium dihydrogen phosphate is added into the autoclave through a high-pressure pump, while raising the temperature to 150°C, so that the pressure in the autoclave reaches 0.42 MPa. The addition of the mixed solution of phosphoric acid and sodium dihydrogen phosphate lasts for 20 minutes. The stirring reaction at this temperature and pressure is carried out for 1.5 hours. The slurry is filtered after the reaction to obtain a first filtrate and a first residue. A sample of the first residue is taken to obtain the test data as shown in Table 2.

**Table 2: Specific information of the first residue in Example 1**

| Index | Fe | Au | Ag | Si | Al |
|---|---|---|---|---|---|
| Data | 1.2% | 6.8g/ton | 67.4g/ton | 31.3% | 2.1% |
| Ca | Mg | S | Cu | Co | Zn |
| 1.3% | 1.1% | 1.8% | 0.003% | 0.002% | 0.001% |
| Pb | Ni | Cr | cd | | |
| 0.008% | 0.002% | 0.003% | 0.0002% | | |

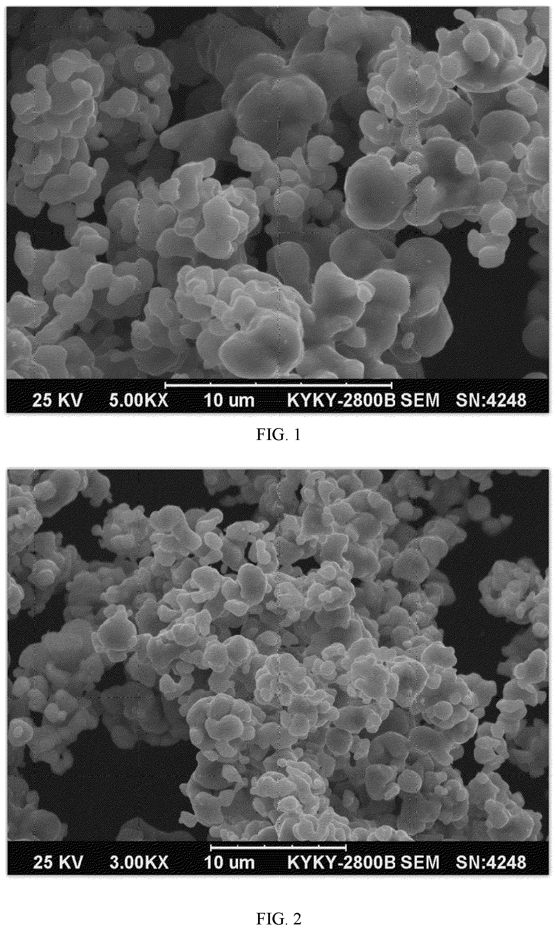

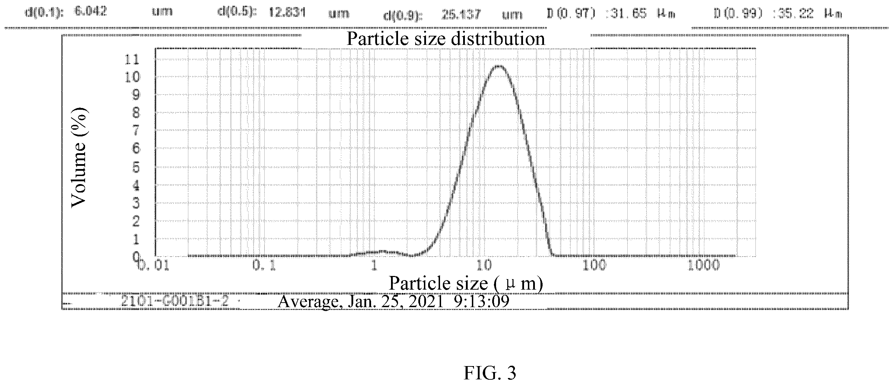

The leaching rate of iron is higher than 95%, and the first residue is enriched with elements such as gold and silver.
(3) The first filtrate is heated with stirring to 50°C, and then air is introduced. Under these conditions, the first filtrate is reacted with stirring until the concentration of iron in the supernatant reaches 0.35g/L. Then the first filtrate is heated to 95°C, and reacted with stirring at this temperature for 40 minutes, and then filtered to obtain a second filtrate and a second residue. The second residue is washed, dried, and calcined. The calcining is performed in a rotary kiln, the calcining temperature is 670°C, and the calcining time is 80 minutes. The calcined material is cooled, crushed, screened, iron removed, and vacuum packed to obtain anhydrous iron phosphate. The test data of the anhydrous iron phosphate are shown in Table 3. The scanning electron microscopic images of the iron phosphate are shown in FIGs. 1 and 2. The particle size distribution of the iron phosphate is shown in the FIG. 3.

**Table 3: Specific information of anhydrous iron phosphate**

| Index | Fe | P | molar ratio of Fe:P | Si | Al |
|---|---|---|---|---|---|
| Data | 36.09% | 20.66% | 0.9688 | 7.9ppm | 21.5ppm |
| Ca | Mg | S | Cu | Co | Zn |
| 29.5ppm | 25.9ppm | 21.5ppm | 0.3ppm | 10.4ppm | 19.4ppm |
| BET | D50 | Pb | Ni | Cr | cd |
| 4.5m²/g | 12.831µm | 1.6ppm | 1.9ppm | 2.9ppm | 5.9ppm |

(4) The second filtrate is returned to mix with sodium dihydrogen phosphate, and then returned to leach the pyrite cinder. After three cycles of recycling use of the second filtrate, the second filtrate is concentrated to have a Baumé degree of 48, then cooled to 8°C, and centrifuged to dry, thereby obtaining sodium sulfate crystals. The mother liquor after the crystallization is added with a sodium sulfide solution and filtered to obtain a third filtrate and a third residue. The pH of the third filtrate is adjusted to 9.5 by adding sodium hydroxide, and the third filtrate is filtered to obtain a fourth filtrate and a fourth residue. The fourth filtrate is returned and used with a fresh phosphoric acid solution and sodium dihydrogen phosphate. The purity of the obtained sodium sulfate crystals is greater than or equal to 98.5%.

The molar ratio of iron in the pyrite cinder to sodium sulfite, phosphoric acid, and sodium dihydrogen phosphate is 1:0.37:0.3:1.7, the concentration of the sodium sulfite solution is 2.5mol/L, and a total molar concentration of phosphoric acid and sodium dihydrogen phosphate in the mixed solution is 2mol/L.
(5) The third residue is calcined in a rotary kiln. The calcining temperature is 600°C, and the calcining time is 3 hours. The waste gas generated in calcining the third residue is absorbed by a sodium hydroxide solution, which is then returned to leach the pyrite cinder. The calcined third residue is dissolved in sulfuric acid, and cobalt and copper are extracted with a P204 extraction agent to obtain a cobalt-copper solution, which is concentrated and crystallized to obtain crude copper sulfate with a purity of 95.6% and crude cobalt sulfate with a purity of 91.5%.
(6) After flotation and further enrichment of gold and silver, the first residue is dissolved in aqua regia and filtered. The obtained filtrate is added with sodium chloride to precipitate the silver therein, obtaining silver chloride. Iron powder is added to the remaining filtrate to displace gold, resulting in crude gold powder.
(7) The gas generated in the autoclave is introduced into a 2mol/L sodium hydroxide solution, while introducing nitrogen gas into the autoclave, so that the sulfur dioxide gas is discharged and absorbed by the sodium hydroxide solution. The concentration of sodium hydroxide in the gas absorbed solution is finally lower than 0.2mol/L, and the obtained gas absorbed solution is a sodium sulfite solution, which can be returned for recycling use. The ratio of the flow rate per hour (m³) of the introduced air to the molar amount (mol) of ferrous ions in the solution is 20.

The preparation method of lithium iron phosphate is as follows:
The above-mentioned anhydrous iron phosphate is added with a lithium source, a carbon source, and a dopant, and then added with purified water to form a slurry. The slurry is nano-ground and then spray-dried to obtain a spray-dried material, which is then calcined in an inert atmosphere to obtain a calcined material. The calcined material is subjected to crushing, screening, iron removal and vacuum packaging to obtain lithium iron phosphate.

The mass ratio of the anhydrous iron phosphate, the lithium source, the carbon source, and the dopant is 1:0.23:0.13:0.0015. The lithium source is lithium carbonate. The carbon source is glucose. The dopant is titanium dioxide.

In the nano-grinding, the slurry is ground until the particle size thereof reaches 320 nm; the inert atmosphere is nitrogen gas, the calcining temperature is 780°C, and the calcining time is 12 hours.

The final test data of lithium iron phosphate is as follows:

| Index | Li | Fe | P | C |
|---|---|---|---|---|
| Data | 4.52% | 36.84% | 19.45% | 1.45% |
| Electrical resistivity of powder | Compaction density | 0.1C first charge capacity | 0.1C first discharge capacity | First discharge efficiency |
| 13.6Ω.cm | 2.42g/mL | 162.5mAh/g | 156.8mAh/g | 96.5% |

The powder electrical resistivity is measured using the four-probe method with a pressure of 10 MPa.

The pressure used for testing the compaction density is 3T.

### Example 2

The preparation method of iron phosphate provided in this example includes the following steps:
(1) is the same as in Example 1.
(2) The pyrite cinder is introduced into an autoclave, added with a potassium sulfite solution, mixed and stirred. A mixed solution of phosphoric acid and sodium dihydrogen phosphate is added into the autoclave through a high-pressure pump, while raising the temperature to 130°C, so that the pressure in the autoclave reaches 0.5 MPa. The addition of the mixed solution of phosphoric acid and sodium dihydrogen phosphate lasts for 15 minutes. The stirring reaction at this temperature and pressure is carried out for 2 hours. The slurry is filtered after the reaction to obtain a first filtrate and a first residue.
(3) The first filtrate is heated with stirring to 40°C, and then air is introduced. Under these conditions, the first filtrate is reacted with stirring until the concentration of iron in the supernatant reaches 0.1g/L. Then the first filtrate is heated to 95°C, and reacted with stirring at this temperature for 30 minutes, and then filtered to obtain a second filtrate and a second residue. The second residue is washed, dried, and calcined. The calcining is performed in a rotary kiln, the calcining temperature is 680°C, and the calcining time is 60 minutes. The calcined material is cooled, crushed, screened, iron removed, and vacuum packed to obtain anhydrous iron phosphate.
(4) The second filtrate is returned to mix with sodium dihydrogen phosphate, and then returned to leach the pyrite cinder. After three cycles of recycling use of the second filtrate, the second filtrate is concentrated to have a Baumé degree of 48, then cooled to 8°C, and centrifuged to dry, thereby obtaining sodium sulfate crystals. The mother liquor after the crystallization is added with a sodium sulfide solution and filtered to obtain a third filtrate and a third residue. The pH of the third filtrate is adjusted to 9 by adding sodium hydroxide, and the third filtrate is filtered to obtain a fourth filtrate and a fourth residue. The fourth filtrate is returned and used with a fresh phosphoric acid solution and sodium dihydrogen phosphate.

The molar ratio of iron in the pyrite cinder to potassium sulfite, phosphoric acid, and sodium dihydrogen phosphate is 1:0.35:0.25:1.7, the concentration of the potassium sulfite solution is 2.5mol/L, and a total molar concentration of phosphoric acid and sodium dihydrogen phosphate in the mixed solution is 2mol/L.
(5) The third residue is calcined in a rotary kiln. The calcining temperature is 500°C, and the calcining time is 4 hours. The waste gas generated in calcining the third residue is absorbed by a sodium hydroxide solution, which is then returned to leach the pyrite cinder. The calcined third residue is dissolved in sulfuric acid, and cobalt and copper are extracted with a P204 extraction agent to obtain a cobalt-copper solution, which is concentrated and crystallized to obtain crude copper sulfate and crude cobalt sulfate.
(6)~(7) are the same as in Example 1.

### Example 3

The preparation method of iron phosphate provided in this example includes the following steps:
(1) is the same as in Example 1.
(2) The pyrite cinder is introduced into an autoclave, added with a sodium sulfite solution, mixed and stirred. A mixed solution of phosphoric acid and sodium dihydrogen phosphate is added into the autoclave through a high-pressure pump, while raising the temperature to 170°C, so that the pressure in the autoclave reaches 0.25 MPa. The addition of the mixed solution of phosphoric acid and sodium dihydrogen phosphate lasts for 30 minutes. The stirring reaction at this temperature and pressure is carried out for 1 hour. The slurry is filtered after the reaction to obtain a first filtrate and a first residue.
(3) The first filtrate is heated with stirring to 60°C, and then air is introduced. Under these conditions, the first filtrate is reacted with stirring until the concentration of iron in the supernatant reaches 0.5g/L. Then the first filtrate is heated to 90°C, and reacted with stirring at this temperature for 60 minutes, and then filtered to obtain a second filtrate and a second residue. The second residue is washed, dried, and calcined. The calcining is performed in a rotary kiln, the calcining temperature is 650°C, and the calcining time is 90 minutes. The calcined material is cooled, crushed, screened, iron removed, and vacuum packed to obtain anhydrous iron phosphate.
(4) The second filtrate is returned to mix with sodium dihydrogen phosphate, and then returned to leach the pyrite cinder. After three cycles of recycling use of the second filtrate, the second filtrate is concentrated to have a Baumé degree of 48, then cooled to 8°C, and centrifuged to dry, thereby obtaining sodium sulfate crystals. The mother liquor after the crystallization is added with a sodium sulfide solution and filtered to obtain a third filtrate and a third residue. The pH of the third filtrate is adjusted to 10 by adding sodium hydroxide, and the third filtrate is filtered to obtain a fourth filtrate and a fourth residue. The fourth filtrate is returned and used with a fresh phosphoric acid solution and sodium dihydrogen phosphate.

The molar ratio of iron in the pyrite cinder to sodium sulfite, phosphoric acid, and sodium dihydrogen phosphate is 1:0.4:0.3:1.75, the concentration of the sodium sulfite solution is 2.5mol/L, and a total molar concentration of phosphoric acid and sodium dihydrogen phosphate in the mixed solution is 2mol/L.
(5) The third residue is calcined in a rotary kiln. The calcining temperature is 700°C, and the calcining time is 2 hours. The waste gas generated in calcining the third residue is absorbed by a sodium hydroxide solution, which is then returned to leach the pyrite cinder. The calcined third residue is dissolved in sulfuric acid, and cobalt and copper are extracted with a P204 extraction agent to obtain a cobalt-copper solution, which is concentrated and crystallized to obtain crude copper sulfate and crude cobalt sulfate.
(6)~(7) are the same as in Example 1.

### Comparative Example 1

The preparation method of iron phosphate provided in this comparative example is different from Example 1 only in that the pressure of the leaching reaction is 0.1MPa, and the leaching rate of iron is 83%.

### Comparative Example 2

The preparation method of iron phosphate provided in this comparative example is different from Example 1 only in that the pH of the reaction system of the leaching reaction is 1. The specific information of the first residue is shown in Table 4.

**Table 4: Specific information of the first residue in Comparative Example 2**

| Index | Fe | Au | Ag | Si | Al |
|---|---|---|---|---|---|
| Data | 1.12% | 6.8g/ton | 67.3g/ton | 30.1% | 1.8 % |
| Ca | Mg | S | Cu | Co | Zn |
| 0.8% | 0.9% | 1.6% | 0.002% | 0.001% | 0.001% |

| Pb | Ni | Cr | cd | | |
|---|---|---|---|---|---|
| 0.005% | 0.001% | 0.001% | 0.0001% | | |

### Comparative Example 3

The preparation method of iron phosphate provided in this comparative example is different from Example 1 only in that the time of the leaching reaction is 0.5 hours, and the leaching rate of iron is 81%.

By comparing Example 1, Comparative Example 1, and Comparative Example 3, it can be seen that the pressure and time of the leaching reaction need to be within the specified ranges to ensure the leaching effect of iron.

By comparing Example 1 and Comparative Example 2, it can be seen that at low pH, the leaching rate of impurities is greatly increased, resulting in the introduction of various impurities into the iron solution, affecting the leaching effect of iron, indicating that the pH needs to be within the specified range to ensure the leaching purity of iron.

## Claims

1. A preparation method of iron phosphate, comprising:
mixing pyrite cinder and an sulfite evenly in water to obtain a first mixed system;
adding phosphoric acid and a buffer to the first mixed system to perform a leaching reaction;
performing a first solid-liquid separation on a slurry obtained from the leaching reaction to obtain a first filtrate and a first residue;
introducing air into the first filtrate and then performing a first stirring reaction on the first filtrate;
performing a second solid-liquid separation on a slurry obtained from the first stirring reaction to obtain a second filtrate and a second residue; and
calcining the second residue to obtain iron phosphate;
wherein the leaching reaction is performed at a pressure of 0.25 MPa ~ 0.5 MPa for a time of 1 hour ~ 2 hours; a pH of a reaction system of the leaching reaction is 1.5-3; the buffer comprises sodium dihydrogen phosphate and/or disodium hydrogen phosphate.

2. The preparation method according to claim 1, wherein a particle size of the pyrite cinder is 80 mesh ~ 120 mesh.

3. The preparation method according to claim 1 or 2, wherein a molar ratio of iron elements in the pyrite cinder to the sulfite, the phosphoric acid, and the buffer is 1: (0.35-0.4): (0.25-0.3): (1.7-1.75).

4. The preparation method according to any one of claims 1 to 3, wherein the phosphoric acid and the buffer are added to the first mixed system within 15 minutes ~ 30 minutes.

5. The preparation method according to any one of claims 1 to 4, wherein a ratio of a volume of the air introduced into the first filtrate per hour to a molar amount of ferrous ions in the first filtrate is (8~12) m³: (28~32) mol.

6. The preparation method according to any one of claims 1 to 5, wherein the leaching reaction is performed at a temperature of 130°C~170°C.

7. The preparation method according to any one of claims 1 to 6, wherein the leaching reaction is performed under a stirring condition.

8. The preparation method according to any one of claims 1 to 7, wherein, before introducing air into the first filtrate, the preparation method further comprises heating the first filtrate to 40°C~60°C under a stirring condition.

9. The preparation method according to any one of claims 1 to 8, wherein the first stirring reaction specifically comprises:
stirring the first filtrate after introduction of air until the iron content in supernatant is less than or equal to 0.5g/L; heating the first filtrate to 90°C~95°C and continuing stirring for 30 minutes ~ 60 minutes.

10. The preparation method according to any one of claims 1 to 9, wherein, before calcining the second residue, the preparation method further comprises washing and drying the second residue;
preferably, a temperature for washing the second residue is 40°C~50°C;
preferably, washing is carried out until pH of liquid after wash is greater than 4.5;
preferably, a moisture content of the second residue after drying is less than 0.5%.

11. The preparation method according to any one of claims 1 to 10, wherein the second residue is calcined at a temperature of 650°C~680°C;
preferably, the second residue is calcined for 60 minutes ~ 90 minutes.

12. The preparation method according to any one of claims 1 to 11, wherein the preparation method further comprises:
after the leaching reaction, introducing gas generated from the leaching reaction into a sodium hydroxide solution to obtain sodium sulfite.

13. The preparation method according to any one of claims 1 to 12, wherein the preparation method further comprises:
cooling the second filtrate and performing a third solid-liquid separation on the second filtrate to obtain sodium sulfate crystals and a mother liquor;
adding sodium sulfide to the mother liquor to obtain a third filtrate and a third residue;
adjusting pH of the third filtrate to 9-10, and performing a fourth solid-liquid separation on the third filtrate to obtain a fourth filtrate and a fourth residue;
calcining the third residue, and dissolving the calcined third residue with sulfuric acid to obtain a second mixed system; and
performing extraction and concentration crystallization on the second mixed system to obtain crude copper sulfate and crude cobalt sulfate;
wherein preferably, the second filtrate is cooled to a temperature of 5°C~10°C;
preferably, the third residue is calcined at a temperature of 500°C~700°C;
preferably, the third residue is calcined for 2 hours to 4 hours.

14. The preparation method according to any one of claims 1 to 13, wherein the preparation method further comprises:
adding aqua regia to the first residue after flotation and enrichment to obtain a third mixed system;
performing a fifth solid-liquid separation on the third mixed system to obtain a fifth filtrate;
performing a sixth solid-liquid separation on the fifth filtrate added with sodium chloride to obtain silver chloride and a sixth filtrate; and
adding iron powder to the sixth filtrate to obtain crude gold powder.

15. A preparation method of lithium iron phosphate, comprising the preparation method of iron phosphate according to any one of claims 1 to 14.

## Patentansprüche

1. Herstellungsverfahren für Eisenphosphat, umfassend:
gleichmäßiges Mischen von Pyritabbrand und eines Sulfits in Wasser, um ein erstes gemischtes System zu erhalten;
Zugeben von Phosphorsäure und eines Puffers zu dem ersten gemischten System, um eine Auslaugungsreaktion durchzuführen;
Durchführen einer ersten Fest-Flüssig-Trennung an einer aus der Auslaugungsreaktion erhaltenen Aufschlämmung, um ein erstes Filtrat und einen ersten Rückstand zu erhalten;
Einleiten von Luft in das erste Filtrat und anschließendes Durchführen einer ersten Rührreaktion an dem ersten Filtrat;
Durchführen einer zweiten Fest-Flüssig-Trennung an einer aus der ersten Rührreaktion erhaltenen Aufschlämmung, um ein zweites Filtrat und einen zweiten Rückstand zu erhalten; und
Kalzinieren des zweiten Rückstands, um Eisenphosphat zu erhalten;
wobei die Auslaugungsreaktion bei einem Druck von 0,25 MPa ~ 0,5 MPa über eine Zeit von 1 Stunde ~ 2 Stunden durchgeführt wird; ein pH-Wert eines Reaktionssystems der Auslaugungsreaktion 1,5~3 beträgt; der Puffer Natriumdihydrogenphosphat und/oder Dinatriumhydrogenphosphat umfasst.

2. Herstellungsverfahren nach Anspruch 1, wobei eine Partikelgröße des Pyritabbrands 80 Mesh ~ 120 Mesh beträgt.

3. Herstellungsverfahren nach Anspruch 1 oder 2, wobei ein Molverhältnis von Eisenelementen im Pyritabbrand zu dem Sulfit, der Phosphorsäure und dem Puffer 1: (0,35~0,4): (0,25~0,3): (1,7~1,75) beträgt.

4. Herstellungsverfahren nach einem der Ansprüche 1 bis 3, wobei die Phosphorsäure und der Puffer innerhalb von 15 Minuten ~ 30 Minuten zu dem ersten gemischten System zugegeben werden.

5. Herstellungsverfahren nach einem der Ansprüche 1 bis 4, wobei ein Verhältnis eines Volumens der pro Stunde in das erste Filtrat eingeleiteten Luft zu einer molaren Menge an Eisen(II)-Ionen im ersten Filtrat (8~12) m³: (28~32) Mol beträgt.

6. Herstellungsverfahren nach einem der Ansprüche 1 bis 5, wobei die Auslaugungsreaktion bei einer Temperatur von 130°C~170°C durchgeführt wird.

7. Herstellungsverfahren nach einem der Ansprüche 1 bis 6, wobei die Auslaugungsreaktion unter Rührbedingungen durchgeführt wird.

8. Herstellungsverfahren nach einem der Ansprüche 1 bis 7, wobei das Herstellungsverfahren vor dem Einleiten von Luft in das erste Filtrat ferner das Erwärmen des ersten Filtrats auf 40°C~60°C unter Rührbedingungen umfasst.

9. Herstellungsverfahren nach einem der Ansprüche 1 bis 8, wobei die erste Rührreaktion insbesondere umfasst:
Rühren des ersten Filtrats nach dem Einleiten von Luft, bis der Eisengehalt im Überstand kleiner als oder gleich 0,5g/L ist; Erwärmen des ersten Filtrats auf 90°C~95°C und Fortsetzen des Rührens für 30 Minuten ~ 60 Minuten.

10. Herstellungsverfahren nach einem der Ansprüche 1 bis 9, wobei das Herstellungsverfahren vor dem Kalzinieren des zweiten Rückstands ferner das Waschen und Trocknen des zweiten Rückstands umfasst;
vorzugsweise eine Temperatur zum Waschen des zweiten Rückstands 40°C~50°C beträgt;
vorzugsweise das Waschen durchgeführt wird, bis der pH-Wert der Flüssigkeit nach dem Waschen größer als 4,5 ist;
vorzugsweise ein Feuchtigkeitsgehalt des zweiten Rückstands nach dem Trocknen weniger als 0,5% beträgt.

11. Herstellungsverfahren nach einem der Ansprüche 1 bis 10, wobei der zweite Rückstand bei einer Temperatur von 650°C~680°C kalziniert wird; vorzugsweise der zweite Rückstand für 60 Minuten ~ 90 Minuten kalziniert wird.

12. Herstellungsverfahren nach einem der Ansprüche 1 bis 11, wobei das Herstellungsverfahren ferner umfasst:
nach der Auslaugungsreaktion Einleiten von aus der Auslaugungsreaktion erzeugtem Gas in eine Natriumhydroxidlösung, um Natriumsulfit zu erhalten.

13. Herstellungsverfahren nach einem der Ansprüche 1 bis 12, wobei das Herstellungsverfahren ferner umfasst:
Kühlen des zweiten Filtrats und Durchführen einer dritten Fest-Flüssig-Trennung an dem zweiten Filtrat, um Natriumsulfatkristallen und eine Mutterlauge zu erhalten;
Zugeben von Natriumsulfid zu der Mutterlauge, um ein drittes Filtrat und einen dritten Rückstand zu erhalten;
Einstellen des pH-Werts des dritten Filtrats auf 9~10 und Durchführen einer vierten Fest-Flüssig-Trennung an dem dritten Filtrat, um ein viertes Filtrat und einen vierten Rückstand zu erhalten;
Kalzinieren des dritten Rückstands und Auflösen des kalzinierten dritten Rückstands mit Schwefelsäure, um ein zweites gemischtes System zu erhalten; und
Durchführen einer Extraktion und einer Konzentrierungskristallisation an dem zweiten gemischten System, um Rohkupfersulfat und Rohkobaltsulfat zu erhalten;
wobei vorzugsweise das zweite Filtrat auf eine Temperatur von 5°C~10°C gekühlt wird;
vorzugsweise der dritte Rückstand bei einer Temperatur von 500°C~700°C kalziniert wird;
vorzugsweise der dritte Rückstand für 2 Stunden bis 4 Stunden kalziniert wird.

14. Herstellungsverfahren nach einem der Ansprüche 1 bis 13, wobei das Herstellungsverfahren ferner umfasst:
Zugeben von Königswasser zu dem ersten Rückstand nach Flotation und Anreicherung, um ein drittes gemischtes System zu erhalten;
Durchführen einer fünften Fest-Flüssig-Trennung an dem dritten gemischten System, um ein fünftes Filtrat zu erhalten;
Durchführen einer sechsten Fest-Flüssig-Trennung an dem mit Natriumchlorid versetzten fünften Filtrat, um Silberchlorid und ein sechstes Filtrat zu erhalten; und
Zugeben von Eisenpulver zu dem sechsten Filtrat, um Rohgoldpulver zu erhalten.

15. Herstellungsverfahren für Lithiumeisenphosphat, umfassend das Herstellungsverfahren für Eisenphosphat nach einem der Ansprüche 1 bis 14.

## Revendications

1. Procédé de préparation de phosphate de fer, comprenant les étapes consistant à :
mélanger uniformément de la cendre de pyrite et un sulfite dans de l'eau pour obtenir un premier système mélangé ;
ajouter de l'acide phosphorique et un tampon au premier système mélangé pour effectuer une réaction de lixiviation ;
effectuer une première séparation solide-liquide sur une boue obtenue à partir de la réaction de lixiviation pour obtenir un premier filtrat et un premier résidu ;
introduire de l'air dans le premier filtrat puis effectuer une première réaction d'agitation sur le premier filtrat ;
effectuer une deuxième séparation solide-liquide sur une boue obtenue à partir de la première réaction d'agitation pour obtenir un deuxième filtrat et un deuxième résidu ; et
calciner le deuxième résidu pour obtenir du phosphate de fer ;
dans lequel la réaction de lixiviation est effectuée à une pression de 0,25 MPa ~ 0,5 MPa pendant une durée de 1 heure ~ 2 heures ; un pH d'un système réactionnel de la réaction de lixiviation est de 1,5~3 ; le tampon comprend du phosphate dihydrogéné de sodium et/ou de l'hydrogénophosphate disodique.

2. Procédé de préparation selon la revendication 1, dans lequel une taille de particule de la cendre de pyrite est de 80 mesh ~ 120 mesh.

3. Procédé de préparation selon la revendication 1 ou 2, dans lequel un rapport molaire d'éléments de fer dans la cendre de pyrite au sulfite, à l'acide phosphorique et au tampon est de 1:(0,35~0,4):(0,25~0,3):(1,7~1,75).

4. Procédé de préparation selon l'une des revendications 1 à 3, dans lequel l'acide phosphorique et le tampon sont ajoutés au premier système mélangé dans un délai de 15 minutes ~ 30 minutes.

5. Procédé de préparation selon l'une des revendications 1 à 4, dans lequel un rapport d'un volume de l'air introduit dans le premier filtrat par heure à une quantité molaire d'ions ferreux dans le premier filtrat est de (8~12) m³:(28~32) mol.

6. Procédé de préparation selon l'une des revendications 1 à 5, dans lequel la réaction de lixiviation est effectuée à une température de 130 °C~170 °C.

7. Procédé de préparation selon l'une des revendications 1 à 6, dans lequel la réaction de lixiviation est effectuée dans une condition d'agitation.

8. Procédé de préparation selon l'une des revendications 1 à 7, dans lequel, avant l'étape consistant à introduire de l'air dans le premier filtrat, le procédé de préparation comprend en outre l'étape consistant à chauffer le premier filtrat à 40 °C~60 °C dans une condition d'agitation.

9. Procédé de préparation selon l'une des revendications 1 à 8, dans lequel la première réaction d'agitation comprend spécifiquement les opérations consistant à :
agiter le premier filtrat après introduction d'air jusqu'à ce que la teneur en fer dans le surnageant soit inférieure ou égale à 0,5 g/L ; chauffer le premier filtrat à 90 °C~95 °C et poursuivre l'agitation pendant 30 minutes ~ 60 minutes.

10. Procédé de préparation selon l'une des revendications 1 à 9, dans lequel, avant l'étape consistant à calciner le deuxième résidu, le procédé de préparation comprend en outre l'étape consistant à laver et à sécher le deuxième résidu ;
de préférence, une température de lavage du deuxième résidu est de 40 °C~50 °C ;
de préférence, le lavage est effectué jusqu'à ce que le pH du liquide après lavage soit supérieur à 4,5 ;
de préférence, une teneur en humidité du deuxième résidu après séchage est inférieure à 0,5 %.

11. Procédé de préparation selon l'une des revendications 1 à 10, dans lequel le deuxième résidu est calciné à une température de 650 °C~680 °C ;
de préférence, le deuxième résidu est calciné pendant 60 minutes ~ 90 minutes.

12. Procédé de préparation selon l'une des revendications 1 à 11, dans lequel le procédé de préparation comprend en outre l'étape consistant à :
après la réaction de lixiviation, introduire un gaz généré par la réaction de lixiviation dans une solution d'hydroxyde de sodium pour obtenir du sulfite de sodium.

13. Procédé de préparation selon l'une des revendications 1 à 12, dans lequel le procédé de préparation comprend en outre les étapes consistant à :
refroidir le deuxième filtrat et effectuer une troisième séparation solide-liquide sur le deuxième filtrat pour obtenir des cristaux de sulfate de sodium et une liqueur mère ;
ajouter du sulfure de sodium à la liqueur mère pour obtenir un troisième filtrat et un troisième résidu ;
ajuster le pH du troisième filtrat à 9~10 et effectuer une quatrième séparation solide-liquide sur le troisième filtrat pour obtenir un quatrième filtrat et un quatrième résidu ;
calciner le troisième résidu et dissoudre le troisième résidu calciné avec de l'acide sulfurique pour obtenir un deuxième système mélangé ; et
effectuer une extraction et une cristallisation par concentration sur le deuxième système mélangé pour obtenir du sulfate de cuivre brut et du sulfate de cobalt brut ;
dans lequel de préférence, le deuxième filtrat est refroidi à une température de 5 °C~10 °C ;
de préférence, le troisième résidu est calciné à une température de 500 °C~700 °C ;
de préférence, le troisième résidu est calciné pendant 2 heures à 4 heures.

14. Procédé de préparation selon l'une des revendications 1 à 13, dans lequel le procédé de préparation comprend en outre les étapes consistant à :
ajouter de l'eau régale au premier résidu après flottation et enrichissement pour obtenir un troisième système mélangé ;
effectuer une cinquième séparation solide-liquide sur le troisième système mélangé pour obtenir un cinquième filtrat ;
effectuer une sixième séparation solide-liquide sur le cinquième filtrat additionné de chlorure de sodium pour obtenir du chlorure d'argent et un sixième filtrat ; et
ajouter de la poudre de fer au sixième filtrat pour obtenir de la poudre d'or brute.

15. Procédé de préparation de phosphate de lithium-fer, comprenant le procédé de préparation de phosphate de fer selon l'une des revendications 1 à 14.
